# EUROPEAN PATENT APPLICATION

(11) **EP 4 668 840 A1**
(43) Date of publication of application: **24.12.2025**
(21) Application number: 23921651.8
(22) Date of filing: 13.02.2023
(51) Int. Cl.: H04W 28/02

(54) **SMALL DATA TRANSMISSION (SDT) METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2023/075711
(87) International publication number: WO 2024/168478

(57) **Abstract**

Embodiments of the present application disclose a small data transmission (SDT) method and apparatus. The method comprises: in response to an enhanced reduced capability (eRedCap) terminal supporting SDT, determining a first threshold, and determining, according to the first threshold, whether to perform SDT; or in response to the eRedCap terminal not supporting SDT, triggering a random access channel (RACH) procedure to enter a connected state. An independent SDT threshold is introduced to the eRedCap terminal, thereby avoiding affecting SDT of non-eRedCap terminals, and ensuring reasonable scheduling of eRedCap terminals.

## Description

### TECHNICAL FIELD

The disclosure relates to the field of communication technology, and in particular to a method and an apparatus for artificial intelligence (AI) model reasoning.

### BACKGROUND

In the case that a network side device configures that an enhanced reduced capability (eRedCap) terminal is allowed to support small data transmission (SDT), if an uplink data packet is generated in an inactive terminal, it is first determined whether a data volume meets a sdt-dataVolume threshold and whether a reference signal receiving power (RSRP) meets an RSRP threshold. In a case of determining that the data volume is less than the sdt-dataVolume threshold and the measured RSRP is greater than the RSRP threshold, the terminal will initiate the SDT transmission.

For transmission of message 3 (Msg3) in the inactive state, due to lacking reference signal (RS) measurement, it is impossible to obtain an accurate link quality state. In a case that a base station schedules the Msg3, a more conservative modulation and coding scheme (MCS) is usually used. In this scenario, if a data volume threshold is configured to be relatively large and the data volume of the eRedCap terminal is relatively large, the eRedCap terminal may only divide a valid payload into a plurality of transport blocks (TBs) for transmission, resulting in a relatively large power consumption of the eRedCap terminal and a relatively large overall transmission delay of the payload, failing to achieve the purpose of reducing power consumption through the SDT transmission in the inactive state.

### SUMMARY

The embodiments of the disclosure provides a method and an apparatus for small data packet transmission (SDT) transmission, introduces a separate SDT transmission threshold for the eRedCap terminal to avoid affecting SDT transmission of a non-eRedCap terminal with a non-enhanced reduced capability, while ensuring reasonable scheduling of the eRedCap terminal, which thus achieves the purpose of reducing power consumption through the SDT transmission.

In a first aspect, an embodiment of the disclosure provides a method for SDT transmission. The method is performed by an enhanced reduced capability (eRedCap) terminal, including: in response to the eRedCap terminal supporting the SDT transmission, determining a first threshold, and determining whether to perform the SDT transmission according to the first threshold; or in response to the eRedCap terminal not supporting the SDT transmission, triggering a random access channel (RACH) procedure to enter a connected state.

In an implementation, the first threshold is the same as or different from a second threshold, and the second threshold is a threshold applied to a non-eRedCap terminal with a non-enhanced reduced capability; the first threshold includes at least one of: a first data volume threshold, or a first reference signal receiving power (RSRP) threshold; the second threshold includes at least one of: a second data volume threshold, or a second RSRP threshold; the first data volume threshold is the same as or different from the second data volume threshold, and the first RSRP threshold is the same as or different from the second RSRP threshold.

In an implementation, determining the first threshold includes determining the first threshold by calculation.

In an implementation, in a case that the first threshold includes the first data volume threshold, determining the first threshold by calculation includes: obtaining a first adjustment parameter and the second data volume threshold, in which the first adjustment parameter includes any one of a coefficient or an offset; and determining the first data volume threshold by calculating according to according to the first adjustment parameter, the second data volume threshold and a transport block size (TBS) maximum processing capacity of the eRedCap terminal.

In an implementation, obtaining the first adjustment parameter includes: obtaining the first adjustment parameter; or receiving the first adjustment parameter sent by a network device via a transmission signaling.

In an implementation, determining the first data volume threshold by calculating according to the first adjustment parameter, the second data volume threshold and the TBS maximum processing capacity of the eRedCap terminal includes: determining the first data volume threshold by calculating a smaller of the second data volume threshold and the TBS maximum processing capacity of the eRedCap terminal, and a first adjustment coefficient; or determining the first data volume threshold by calculating the second data volume threshold and the first adjustment parameter; or determining the first data volume threshold by calculating the TBS maximum processing capacity of the eRedCap terminal and the first adjustment parameter.

In an implementation, in a case that the first threshold includes a data volume threshold, determining the first threshold by calculation includes: obtaining an RSRP threshold; and determining the first data volume threshold according to the RSRP threshold and a corresponding relationship between RSRPs and data volume thresholds.

In an implementation, in a case that the first threshold includes an RSRP threshold, determining the first threshold by calculation includes: obtaining a second adjustment parameter and the second RSRP threshold, in which the second adjustment parameter includes any one of a coefficient or an offset; and determining the first RSRP threshold by calculating according to a second adjustment coefficient and the second RSRP threshold based on a first RSRP threshold calculation rule.

In an implementation, determining the first RSRP threshold by calculating according to the second adjustment coefficient and the second RSRP threshold based on the first RSRP threshold calculation rule includes: determining the first RSRP threshold by calculating the second RSRP threshold and the second adjustment parameter.

In an implementation, obtaining the second adjustment parameter includes: obtaining the second adjustment parameter; or receiving the second adjustment parameter sent by a network device via a transmission signaling.

In an implementation, in a case that the first threshold includes an RSRP threshold, determining the first threshold by calculation includes: obtaining a data volume threshold; and determining the first RSRP threshold according to the data volume threshold and a corresponding relationship between RSRPs and data volume thresholds.

In an implementation, determining the first threshold includes: receiving the first threshold sent by a network device via a transmission signaling.

In an implementation, the transmission signaling is any one of: a radio resource control (RRC) release message, or a system information block 1 (SIB1).

In an implementation, the method further includes: in response to the second data volume threshold being less than or equal to a TBS maximum processing capacity of the eRedCap terminal, determining the second threshold as the first threshold, in which the first threshold is the same as the second threshold.

In an implementation, the method further includes: in response to the first data volume threshold being greater than the TBS maximum processing capacity of the eRedCap terminal, determining not to perform the SDT transmission, and triggering the RACH procedure to enter the connected state.

In a second aspect, a method for SDT transmission is also provided. The method is performed by a network device, including: in response to an eRedCap terminal supporting the SDT transmission, configuring a first threshold for the eRedCap terminal; and sending the first threshold to the eRedCap terminal via a transmission signaling.

In an implementation, the first threshold is the same as or different from a second threshold, and the second threshold is a threshold applied to a non-eRedCap terminal with a non-enhanced reduced capability; the first threshold includes at least one of: a first data volume threshold, or a first RSRP threshold; the second threshold includes at least one of: a second data volume threshold, or a second RSRP threshold; the first data volume threshold is the same as or different from the second data volume threshold, and the first RSRP threshold is the same as or different from the second RSRP threshold.

In an implementation, configuring the first threshold for the eRedCap terminal includes: receiving terminal capability information sent by each eRedCap terminal; determining whether each eRedCap terminal supports the SDT transmission according to the terminal capability information; and in response to determining that the SDT transmission is supported, configuring the first threshold for the eRedCap terminal.

In an implementation, configuring the first threshold for the eRedCap terminal includes: configuring the first threshold for the eRedCap terminal, in which the first threshold is different from the second threshold; or in response to the second data volume threshold being greater than a TBS maximum processing capacity of the eRedCap terminal, configuring the first threshold for the eRedCap terminal, in which the first threshold is different from the second threshold; or in response to the second data volume threshold being less than or equal to the TBS maximum processing capacity of the eRedCap terminal, determining the second threshold as the first threshold, and configuring the first threshold for the eRedCap terminal, in which the first threshold is the same as the second threshold.

In an implementation, the method further includes: sending a first adjustment parameter, a second adjustment parameter and the second threshold to the eRedCap terminal via a transmission signaling.

In an implementation, the transmission signaling is any one of: an RRC release message or an SIB1.

In an implementation, in a case that the first threshold is sent to the eRedCap terminal via the RRC release message, configuring the first threshold for the eRedCap terminal includes: configuring different first thresholds for different eRedCap terminals.

In a third aspect, an apparatus for SDT transmission is also provided. The apparatus is arranged in an eRedCap terminal, including: a processing module, configured to in response to the eRedCap terminal supporting the SDT transmission, determine a first threshold, and determine whether to perform the SDT transmission according to the first threshold, in which the first threshold is the same as or different from a second threshold, and the second threshold is a threshold applied to a non-eRedCap terminal with a non-enhanced reduced capability. The processing module is further configured to trigger an RACH procedure and enter a connected state in response to the eRedCap terminal not supporting the SDT transmission.

In an implementation, the first threshold includes at least one of: a first data volume threshold, or a first RSRP threshold; the second threshold includes at least one of: a second data volume threshold, or a second RSRP threshold; the first data volume threshold is the same as or different from the second data volume threshold, and the first RSRP threshold is the same as or different from the second RSRP threshold.

In an implementation, the processing module is further configured to: determine the first threshold by calculation; or in response to the second data volume threshold being greater than a TBS maximum processing capability of the eRedCap terminal, determine the first threshold by calculation; the first threshold is different from the second threshold.

In an implementation, in a case that the first threshold includes the first data volume threshold, the processing module is further configured to: obtain a first adjustment parameter and the second data volume threshold, in which the first adjustment parameter includes any one of a coefficient or an offset; and determine the first data volume threshold by calculating according to according to the first adjustment parameter, the second data volume threshold and the TBS maximum processing capacity of the eRedCap terminal.

In an implementation, the processing module is further configured to obtain the first adjustment parameter; the receiving module is configured to receive the first adjustment parameter sent by a network device via a transmission signaling.

In an implementation, the processing module is further configured to: determine the first data volume threshold by calculating a smaller of the second data volume threshold and the TBS maximum processing capacity of the eRedCap terminal, and a first adjustment coefficient; or determine the first data volume threshold by calculating the second data volume threshold and the first adjustment parameter; or determine the first data volume threshold by calculating the TBS maximum processing capacity of the eRedCap terminal and the first adjustment parameter.

In an implementation, in a case that the first threshold includes a data volume threshold, the processing module is further configured to: obtain an RSRP threshold; and determine the first data volume threshold according to the RSRP threshold and a corresponding relationship between RSRPs and data volume thresholds.

In an implementation, in a case that the first threshold includes an RSRP threshold, the processing module is further configured to: obtain a second adjustment parameter and the second RSRP threshold, in which the second adjustment parameter includes any one of a coefficient or an offset; and determine the first RSRP threshold by calculating according to a second adjustment coefficient and the second RSRP threshold based on a first RSRP threshold calculation rule.

In an implementation, the processing module is further configured to: determine the first RSRP threshold by calculating the second RSRP threshold and the second adjustment parameter.

In an implementation, the processing module is further configured to obtain the second adjustment parameter; the receiving module is configured to receive the second adjustment parameter sent by a network device via a transmission signaling.

In an implementation, in a case that the first threshold includes an RSRP threshold, the processing module is further configured to: obtain a data volume threshold; and determine the first RSRP threshold according to the data volume threshold and a corresponding relationship between RSRPs and data volume thresholds.

In an implementation, the receiving module is configured to receive the first threshold sent by a network device via a transmission signaling.

In an implementation, the transmission signaling is any one of an RRC release message or an SIB1.

In an implementation, the processing module is further configured to: in response to the second data volume threshold being less than or equal to a TBS maximum processing capacity of the eRedCap terminal, determine the second threshold as the first threshold, in which the first threshold is the same as the second threshold.

In an implementation, the processing module is further configured to: in response to the first data volume threshold being greater than the TBS maximum processing capacity of the eRedCap terminal, determine not to perform the SDT transmission, and trigger the RACH procedure to enter the connected state.

In a fourth aspect, an apparatus for SDT transmission is also provided, which is arranged in a network device, and includes: a processing module, configured to in response to an eRedCap terminal supporting the SDT transmission, configure a first threshold for the eRedCap terminal, in which the first threshold is the same as or different from a second threshold, and the second threshold is a threshold applied to a non-eRedCap terminal with a non-enhanced reduced capability; and a sending module, configured to send the first threshold to the eRedCap terminal via a transmission signaling.

In an implementation, the first threshold includes at least one of: a first data volume threshold, or a first RSRP threshold; the second threshold includes at least one of: a second data volume threshold, or a second RSRP threshold; the first data volume threshold is the same as or different from the second data volume threshold, and the first RSRP threshold is the same as or different from the second RSRP threshold.

In an implementation, the apparatus includes: a receiving module, configured to receive terminal capability information sent by each eRedCap terminal; the processing module is further configured to determine whether each eRedCap terminal supports the SDT transmission according to the terminal capability information, and in response to determining that the SDT transmission is supported, configure the first threshold for the eRedCap terminal.

In an implementation, the processing module is further used to configure the first threshold for the eRedCap terminal, in which the first threshold is different from the second threshold; or in response to the second data volume threshold being greater than a TBS maximum processing capacity of the eRedCap terminal, configure the first threshold for the eRedCap terminal, in which the first threshold is different from the second threshold; or in response to the second data volume threshold being less than or equal to the TBS maximum processing capacity of the eRedCap terminal, determine the second threshold as the first threshold, and configure the first threshold for the eRedCap terminal, in which the first threshold is the same as the second threshold.

In an implementation, the sending module is further configured to send a first adjustment parameter, a second adjustment parameter and the second threshold to the eRedCap terminal via a transmission signaling.

In an implementation, the transmission signaling is any one of an RRC release message or an SIB1.

In an implementation, in a case that the first threshold is sent to the eRedCap terminal via the RRC release message, the processing module is further used to configure different first thresholds for different eRedCap terminals.

In a fifth aspect, an embodiment of the disclosure provides a device for SDT transmission, which includes a processor and a memory storing a computer program. In a case that the computer program is executed by the processor, the device is caused to perform the method described in the first aspect or the second aspect.

In a sixth aspect, an embodiment of the disclosure provides a device for SDT transmission, which includes: a processor and an interface circuit; the interface circuit is configured to receive code instructions and transmit the code instructions to the processor; and the processor is configured to run the code instructions and execute the method described in the first aspect or the second aspect.

In a seventh aspect, an embodiment of the disclosure provides a computer-readable storage medium for storing instructions, which, when executed, enables the method described in the first aspect or the second aspect to be implemented.

In the method for SDT transmission and the terminal according to the disclosure, in response to the eRedCap terminal supporting the SDT transmission, the first threshold is determined, and whether to perform the SDT transmission is determined according to the first threshold, in which the first threshold is the same as or different from the second threshold, and the second threshold is a threshold applied to the non-eRedCap terminal with the non-enhanced reduced capability; or in response to the eRedCap terminal not supporting the SDT transmission, the RACH procedure is triggered to enter the connected state. The independent SDT transmission threshold is introduced for the eRedCap terminal to avoid affecting SDT transmission of the non-eRedCap terminal with the non-enhanced reduced capability, while ensuring reasonable scheduling of the eRedCap terminal, which thus achieves the purpose of reducing power consumption through the SDT transmission.

### BRIEF DESCRIPTION OF THE DRAWINGS

In order to more clearly illustrate the technical solutions in the embodiments of the disclosure or the related art, the drawings required for use in the embodiments of the disclosure or the related art will be described below.
FIG. 1 is a schematic diagram of a communication system according to an embodiment of the disclosure.
FIG. 2 is a flowchart of a method for SDT transmission according to an embodiment of the disclosure.
FIG. 3 is a flowchart of another method for SDT transmission according to an embodiment of the disclosure.
FIG. 4 is a flowchart of a method for determining a first threshold by calculation according to an embodiment of the disclosure.
FIG. 5 is a flowchart of another method for determining a first threshold by calculation according to an embodiment of the disclosure.
FIG. 6 is a flowchart of another method for determining a first threshold by calculation according to an embodiment of the disclosure.
FIG. 7 is a flowchart of another method for determining a first threshold by calculation according to an embodiment of the disclosure.
FIG. 8 is a flowchart of another method for SDT transmission according to an embodiment of the disclosure.
FIG. 9 is a flowchart of another method for SDT transmission according to an embodiment of the disclosure.
FIG. 10 is a flowchart of another method for SDT transmission according to an embodiment of the disclosure.
FIG. 11 is a flowchart of a method for configuring a first threshold for an eRedCap terminal by a network device according to an embodiment of the disclosure.
FIG. 12 is a flowchart of another method for SDT transmission according to an embodiment of the disclosure.
FIG. 13 is a structure diagram of an apparatus for SDT transmission according to an embodiment of the disclosure.
FIG. 14 is a structure diagram of an apparatus for SDT transmission according to an embodiment of the disclosure.
FIG. 15 is a structure diagram of a device for SDT transmission according to an embodiment of the disclosure.
FIG. 16 is a structure diagram of a device for SDT transmission according to an embodiment of the disclosure.

### DETAILED DESCRIPTION

Reference will now be made in detail to exemplary embodiments, examples of which are illustrated in the accompanying drawings. In a case that the following description refers to the drawings, unless otherwise indicated, the same numbers in different drawings represent the same or similar elements. The implementations described in the following exemplary embodiments do not represent all implementations consistent with the embodiments of the disclosure. Rather, they are merely examples of apparatuses and methods consistent with some aspects of the embodiments of the disclosure as recited in the appended claims.

The terms used in the embodiments of the disclosure are for the purpose of describing specific embodiments only and are not intended to limit the embodiments of the disclosure. As used in the embodiments of the disclosures and the appended claims, the singular forms "a/an," and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used to describe various information in the embodiments of the disclosure, the information should not be limited to these terms. These terms are used only to distinguish information of the same type from one another. For example, without departing from the scope of the embodiments of the disclosure, the first information may also be referred to as the second information, and similarly, the second information may also be referred to as the first information. Depending on the context, the words "if" and "in case that" as used herein may be interpreted as "when" or "while" or "in response to determining ... ".

Embodiments of the disclosure are described in detail below, examples of which are illustrated in the accompanying drawings, throughout which the same or similar reference numerals refer to the same or similar elements, unless the context clearly indicates otherwise. The implementations described in the following exemplary embodiments do not represent all implementations consistent with the embodiments of the disclosure. Rather, they are merely examples of apparatuses and methods consistent with some aspects of the embodiments of the disclosure as recited in the appended claims.

The terms in the embodiments of the disclosure are used for the purpose of describing specific embodiments only and are not intended to limit the embodiments of the disclosure. As used in the embodiments of the disclosures and the appended claims, the singular forms "a/an" and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used to describe various information in the embodiments of the disclosure, the information should not be limited to these terms. These terms are used only to distinguish information of the same type from one another. For example, without departing from the scope of the embodiments of the disclosure, the first information may also be referred to as the second information, and similarly, the second information may also be referred to as the first information. Depending on the context, the words "if" and "in case that" as used herein may be interpreted as "when" or "while" or "in response to determining ... ".

Embodiments of the disclosure are described in detail below, examples of which are illustrated in the accompanying drawings, throughout which the same or similar reference numerals refer to the same or similar elements. The embodiments described below with reference to the accompanying drawings are exemplary and are intended to be used to explain the disclosure, but cannot be understood as a limitation to the disclosure.

In order to better understand a control method for discontinuous reception (DRX) in a direct sidelink disclosed in an embodiment of the disclosure, a communication system to which the embodiments of the disclosure are applicable is first described below. The same or similar elements are shown. The embodiments described below with reference to the accompanying drawings are exemplary and are intended to be used to explain the disclosure, but should not be construed as limiting the disclosure.

In order to better understand the method for SDT transmission disclosed in the embodiments of the disclosure, the communication system to which the embodiments of the disclosure are applicable is first described below.

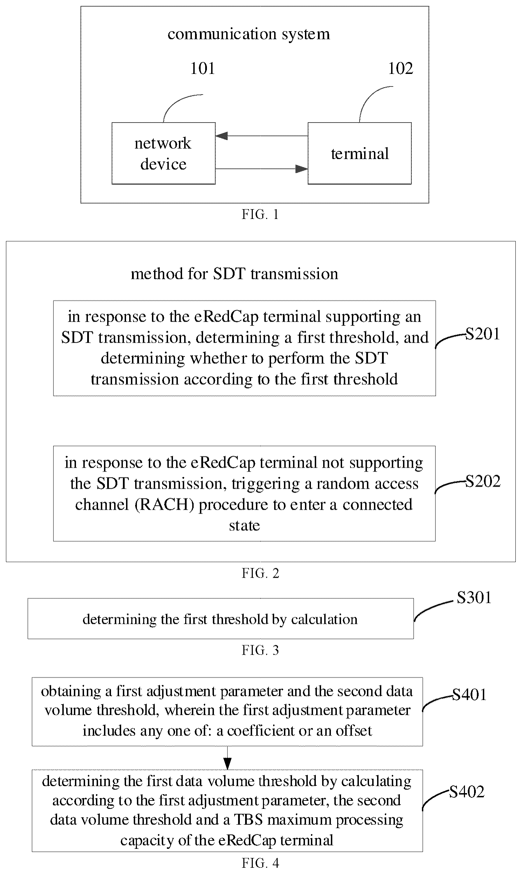

Referring to FIG. 1, it is a schematic diagram of an architecture of a communication system according to the disclosure. The communication system may include but is not limited to a network device and a terminal, in which the terminal communicates with the network device. The number and form of devices shown in FIG. 1 are for example only and do not constitute a limitation of the disclosure. In actual applications, two or more network devices and two or more terminals may be included. The communication system shown in FIG. 1 includes a network device 101 and a terminal 102.

As an example, a terminal may function as both an eRedCap terminal and a non-eRedCap terminal.

It needs to be noted that the technical solutions of the embodiments of the disclosure may be applied to various communication systems, e.g., a long term evolution (LTE) system, a fifth generation (5G) mobile communication system, a 5G new radio (NR) system, or other future new mobile communication systems.

The network device in the embodiments of the disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. The embodiments of the disclosure do not limit the specific technology and specific device form adopted by the network device. The network device according to the embodiments of the disclosure may be composed of a centralized unit (CU) and a distributed unit (DU), in which the CU may also be referred to as a control unit. The CU-DU structure may be used to split a protocol layer of a network device such as a base station, some functions of which are centrally controlled by the CU, the remaining part or all of the functions of which are distributed in the DU, and the DU is centrally controlled by the CU.

The terminal in the embodiments of the disclosure is an entity on the user side for receiving or transmitting signals, such as a mobile phone. The terminal may also be called a mobile station (MS), a mobile terminal (MT), etc. The terminal may be a car with communication function, a smart car, a mobile phone, a wearable device, a tablet computer, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The embodiments of the disclosure do not limit the specific technology and specific device form adopted by the terminal.

Since the inactive state cannot obtain an accurate link quality state, a more conservative modulation and coding scheme (MCS) is usually used in a case that a base station schedules the message 3 (Msg3). In this scenario, if a data volume threshold is configured to be relatively large and the data volume of the eRedCap terminal is relatively large, the eRedCap terminal may only divide a valid payload into a plurality of transport blocks (TBs) for transmission, resulting in a relatively large power consumption of the eRedCap terminal and a relatively large overall transmission delay of the payload, failing to achieve the purpose of reducing power consumption through the SDT transmission in the inactive state. If the data volume threshold of the eRedCap terminal is relatively small, the eRedCap terminal will enter a connected state. Therefore, how to set a dataVolume threshold for the eRedCap terminal is an urgent problem to be solved.

In view of the above problem, the embodiments of the disclosure provide a method and an apparatus for SDT.

Referring to FIG. 2, it is a flowchart of a method for SDT transmission according to an embodiment of the disclosure. As shown in FIG. 2, the method is performed by an eRedCap terminal, and the method may include but is not limited to the following steps S201-S202.

At S201, in response to the eRedCap terminal supporting an SDT transmission, a first threshold is determined, and whether to perform the SDT transmission is determined according to the first threshold.

In the case of determining that the eRedCap terminal supports the SDT transmission, the first threshold is determined, and if an uplink data packet arrives at the eRedCap terminal in the inactive state, it is determined whether to perform the SDT transmission according to the first threshold. In actual applications, the inactive state means that the eRedCap terminal is in an inactive state.

After the eRedCap terminal determines the first threshold, the first threshold is used to determine whether to perform the SDT transmission. In a case that the data volume is less than or equal to the first threshold, the SDT transmission is performed; in a case that the data volume is greater than the first threshold, the SDT transmission is not performed.

At S202, in response to the eRedCap terminal not supporting the SDT transmission, a random access channel (RACH) procedure is triggered to enter a connected state.

In the case of determining that the eRedCap terminal supports the SDT transmission, the eRedCap terminal will trigger the RACH procedure to enter the connected state. Considering that relatively accurate RS measurement is required in the connected state, a more accurate MCS may be used in this case. For example, a relatively high MCS may be used to minimize segmentation of the payload, which thus reduces power consumption and shortens the overall transmission delay.

It needs to be noted that the embodiments of the disclosure may include a plurality of steps (steps S201 to S202). For the convenience of description, these steps are numbered, but these numbers do not limit the execution slots and execution order between the steps. Instead, they are executed separately under different conditions or scenarios.

For the implementation of triggering the RACH procedure and entering the connected state, reference may be made to any description of the related art, which is not repeated here.

In summary, after determining that the SDT transmission is supported, the eRedCap terminal determines the first threshold and determines whether to perform the SDT transmission according to the first threshold. By introducing a separate SDT transmission threshold for the eRedCap terminal, it may ensure reasonable scheduling of the eRedCap terminal. Alternatively, after determining that the eRedCap terminal does not support the SDT transmission, the RACH procedure is triggered to enter the connected state to avoid affecting the SDT transmission of the non-eRedCap terminal.

In an embodiment of the disclosure, in a case of determining the first threshold, it may be determined based on a second threshold, where the second threshold is a threshold applied to a non-eRedCap terminal with a non-enhanced reduced capability. It may also be determined not based on the second threshold, which is not limited in the embodiments of the disclosure. The first threshold may be the same as the second threshold, or may be different from the second threshold. In specific implementation, it is set according to actual situations, which is not limited in the embodiments of the disclosure.

The first threshold is a first threshold determined by the eRedCap terminal, and the second threshold is a second threshold determined by the non-eRedCap terminal (also referred to as a legacy/normal terminal). In actual applications, in a case that the second threshold is less than or equal to a maximum TBS processing capacity of the eRedCap terminal, the first threshold is the same as the second threshold; in a case that the second threshold is greater than the maximum TBS processing capacity of the eRedCap terminal, the first threshold is different from the second threshold. Such a configuration will not affect the SDT transmission of the non-eRedCap terminal, while ensuring reasonable scheduling of the eRedCap terminal, which thus achieves the purpose of reducing power consumption through the SDT transmission.

Alternatively, the first threshold is the same as the second threshold, that is, the base station configures the same threshold for the non-eRedCap terminal and the eRedCap terminal.

The first threshold includes at least one of: a first data volume threshold or a first RSRP threshold; the second threshold includes at least one of: a second data volume threshold or a second RSRP threshold. In the embodiments of the disclosure, the first threshold is the same as or different from the second threshold, and the first threshold and the second threshold are independent of each other. The embodiments of the disclosure do not limit the magnitudes of the first threshold and the second threshold. The first threshold is a first threshold determined by the eRedCap terminal, and the second threshold is a second threshold determined by the non-eRedCap terminal (also referred to as a legacy/normal terminal).

In a case of determining the first threshold, the eRedCap terminal may determine the first threshold by calculation, or the network device may configure the first threshold for the eRedCap terminal. In certain scenarios, the second threshold may also be determined as the first threshold, that is, the first threshold is equal to the second threshold. The manner used in a specific embodiment is not limited in the embodiments of the disclosure, and reference may be made to the following specific description for details.

An embodiment of the disclosure provides a method for determining a first threshold. FIG. 3 is a flowchart of a method for determining a first threshold according to an embodiment of the disclosure. The method for SDT transmission may be executed alone, or it may be executed in combination with any embodiment of the disclosure or a possible implementation in the embodiments, and it may also be executed in combination with any technical solution in the related art.

As shown in FIG. 3, the method for determining the first threshold may include the following step S301.

At S301, the first threshold is determined by calculation.

In a case of determining the first threshold by calculation, different processing manners may be performed for different scenarios, as follows.

Scenario 1: in the case that the eRedCap terminal supports the SDT transmission, the eRedCap terminal does not make any judgment and determines the first threshold by calculation, in which the first threshold is used to determine whether a condition for executing the SDT transmission is met. In a case of calculating and determining the first threshold in this scenario, the second threshold is not considered. That is, no matter the second data volume threshold is greater than the maximum TBS processing capacity of the eRedCap terminal, or the second data volume threshold is less than or equal to the maximum TBS processing capacity of the eRedCap terminal, a separate configuration of the first threshold is executed after the eRedCap terminal supports the SDT transmission,.

Scenario 2: in the case that the eRedCap terminal supports the SDT transmission, the eRedCap terminal first compares the second threshold with the maximum TBS processing capability of the eRedCap terminal, and in the case of determining that the second threshold is greater than the maximum TBS processing capability of the eRedCap terminal, the first threshold is determined by calculation. It needs to be noted that a difference between scenario 2 and scenario 1 is that the eRedCap terminal determines the first threshold only in a case of determining that the second threshold is greater than the maximum TBS processing capacity of the eRedCap terminal in scenario 2, but not to determine the first threshold in a case of determining that the second threshold is not greater than the maximum TBS processing capacity of the eRedCap terminal. In summary, after determining that the SDT transmission is supported, the eRedCap terminal determines the first threshold by calculation, and then determines whether to perform the SDT transmission according to the first threshold. By introducing a separate SDT transmission threshold for the eRedCap terminal, reasonable scheduling of the eRedCap terminal may be ensured.

It may be seen from the above embodiments that the first threshold includes at least one of: a first data volume threshold or a first RSRP threshold. In a case that the content included in the first threshold is different, the manner of determining the first threshold may also be different, specifically:
Manner 1: in a case that the first threshold includes the first data volume threshold, the first threshold is determined by calculation as shown in FIG. 4, which is a flowchart of a method for determining the first threshold by calculation according to an embodiment of the disclosure. The method includes the following steps S401-S402.

At S401, a first adjustment parameter and the second data volume threshold are obtained. The first adjustment parameter includes any one of a coefficient or an offset.

The first adjustment parameter and the second data volume threshold described in the disclosure are configured by the base station and sent to the eRedCap terminal. In an example, the first adjustment parameter is a coefficient (such as expressed by *alpha),* whose value is less than or equal to 1. In an example, the first adjustment parameter *alpha* may be configured by the network device (such as the base station) to 1, 0.8 or 0.6, etc., the specific value of which is not limited here.

The first adjustment parameter is an offset (such as expressed by *offset).* As an implementable manner of the disclosure, the *offset* is an offset relative to the non-eRedCap terminal. It may be set according to service needs, without specific limitations.

It needs to be noted that the coefficient and offset described in the disclosure are all configurable fixed values, or the coefficient and offset may also be fixed values agreed in a protocol.

At S402, the first data volume threshold is determined by calculation according to the first adjustment parameter, the second data volume threshold, and the TBS maximum processing capability of the eRedCap terminal.

In a case of determining the first data volume threshold, it is necessary to refer to the TBS maximum processing capacity of the eRedCap terminal, the purpose of which is to prevent the determined first threshold from exceeding the TBS maximum processing capacity of the eRedCap terminal, and avoid causing the problems of large power consumption of the eRedCap terminal and large overall transmission delay of the payload.

As a feasible manner of the disclosure, in a case that the first data volume threshold is determined by calculating according to the first adjustment parameter, the second data volume threshold and the TBS maximum processing capacity of the eRedCap terminal, the eRedCap terminal may determine the first data volume threshold by calculating according to the first adjustment parameter, the second data volume threshold and the TBS maximum processing capacity of the eRedCap terminal based on a first data volume threshold calculation rule between the eRedCap terminal and the network device.

As another feasible manner of the disclosure, the first data volume threshold calculation rule may be configured by the network device or agreed in the protocol, which is not limited in the disclosure.

An embodiment of the disclosure provides a manner of obtaining the first adjustment parameter. The manner of obtaining the first adjustment parameter may be executed alone, or may be executed in combination with any embodiment of the disclosure or a possible implementation in the embodiments, or may be executed in combination with any technical solution in the related art. As an implementable manner of the disclosure, the first adjustment parameter is obtained according to an agreement in the protocol. As another implementable manner of the disclosure, the first adjustment parameter is configured by the network device.

In summary, after the eRedCap terminal determines that the SDT transmission is supported by itself, in a case that the first threshold includes the first data volume threshold, the first adjustment parameter and the second data volume threshold are obtained, in which the first adjustment parameter includes any of a coefficient or an offset; the first data volume threshold is determined by calculating according to the first adjustment parameter, the second data volume threshold and the TBS maximum processing capacity of the eRedCap terminal, and whether to perform the SDT transmission is determined according to the first data volume threshold. By introducing a separate SDT transmission threshold (first data volume threshold) for the eRedCap terminal, reasonable scheduling of the eRedCap terminal may be ensured. After determining that the eRedCap terminal does not support the SDT transmission, the RACH procedure is triggered to enter the connected state to avoid affecting the SDT transmission of the non-eRedCap terminal.

As a feasible manner of the disclosure, determining the first data volume threshold by calculating according to the first adjustment parameter, the second data volume threshold and the TBS maximum processing capacity of the eRedCap terminal, includes the following manners.
(1) a smaller of the second data volume threshold and the TBS maximum processing capacity of the eRedCap terminal and the first adjustment coefficient are calculated to determine the first data volume threshold. For the eRedCap terminal, the method for determining the first data volume threshold *data volume threshold* may be calculated by the following method: *alpha1 * min{data volume threshold for non-eRedCap terminal, the maximum TBS supported by eRedCap*}, where the *alpha1* is a first adjustment coefficient, and may be indicated/configured by the base station, or a specific value of the *alpha1* may be given by the protocol, the *data volume threshold for non-eRedCap terminal* is the second data volume threshold, and the *maximum TBS supported by eRedCap* is the maximum TBS processing capacity of the eRedCap terminal.
(2) the second data volume threshold and the first adjustment parameter are calculated to determine the first data volume threshold. For the eRedCap terminal, the method for determining the first data volume threshold *data volume threshold* may be calculated by the following method: *alpha * data volume threshold for non-eRedCap terminal* or *data volume threshold for non-eRedCap terminal - offset,* where the *offset* is the first adjustment parameter (first adjustment offset), off*s*e*t1* may be indicated/configured by the base station, or a specific value may be given by the protocol.
(3) the TBS maximum processing capacity of the eRedCap terminal and the first adjustment parameter are calculated to determine the first data volume threshold. For the eRedCap terminal, the first data volume threshold *data volume threshold* may be determined by the following calculation method: *alpha * the maximum TBS supported by eRedCap.*

In the above manners (1) to (3), in a case that the eRedCap terminal determines the first data volume threshold, any of the manners may be selected according to service requirements of the eRedCap terminal. Specifically, it is not limited in the disclosure.

In summary, the Manner 1 is that the eRedCap terminal determines that there is a separate first threshold.

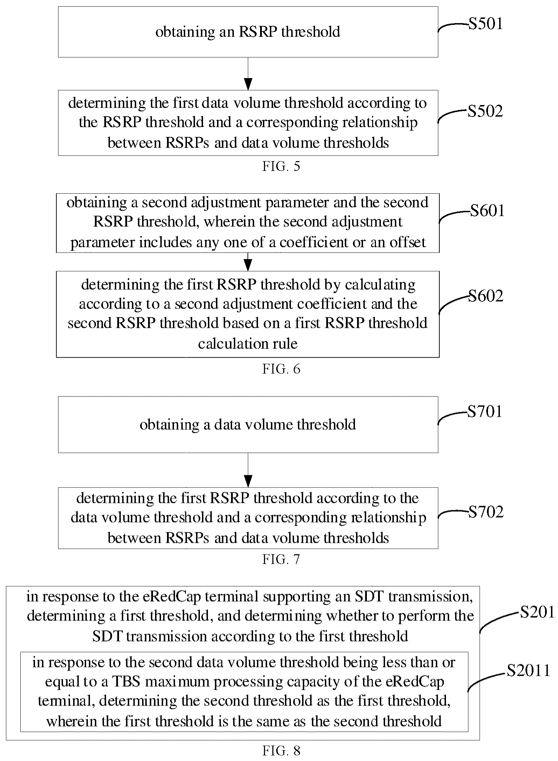

Manner 2: in a case that the first threshold includes a data volume threshold, the first threshold is determined by calculation with reference to FIG. 5, which is a flowchart of another method for determining the first threshold by calculation according to an embodiment of the disclosure. As shown in FIG. 5, the method may include but is not limited to the following steps S501-S502.

At S501, an RSRP threshold is obtained.

As an implementation, the network device may configure the RSRP threshold and send the RSRP threshold to the eRedCap terminal; or the RSRP threshold may be agreed in the protocol, which is not limited in the disclosure.

At S502, the first data volume threshold is determined according to the RSRP threshold and a corresponding relationship between RSRPs and data volume thresholds.

After receiving the RSRP threshold sent by the network device, the eRedCap terminal determines a first data volume threshold corresponding to the RSRP threshold according to the corresponding relationship between RSRPs and data volume thresholds. As an implementation, the network device may configure the corresponding relationship between RSRPs and data volume thresholds, and send the corresponding relationship between RSRPs and data volume thresholds to the eRedCap terminal; or the corresponding relationship between RSRPs and data volume thresholds may be agreed in the protocol, which is not limited in the disclosure.

In an example, the corresponding relationship between RSRPs and data volume thresholds is that the first data volume threshold needs to be configured as B1 in a case that the RSRP threshold is configured as A1, and the first data volume threshold needs to be configured as B2 in a case that the RSRP threshold is configured as A2. Therefore, after the eRedCap terminal receives the RSRP threshold sent by the network device, the first data volume threshold may be configured according to the given corresponding relationship between RSRPs and data volume thresholds.

In summary, in the Manner 2, the eRedCap terminal determines a separate first data volume threshold configured for SDT transmission according to the RSRP threshold and the corresponding relationship between RSRPs and data volume thresholds. That is, both the RSRP threshold and the first data volume threshold are configured.

The RSRP threshold and the corresponding relationship between RSRPs and data volume thresholds may be configured by the network device or agreed in the protocol, which is not limited in this disclosure.

Manner 3: in a case that the first threshold includes an RSRP threshold, the first threshold is determined by calculation with reference to FIG. 6, which is a flowchart of another method for determining the first threshold by calculation according to an embodiment of the disclosure. As shown in FIG. 6, the method may include but is not limited to the following steps S601-S602.

At S601, the second adjustment parameter and the second RSRP threshold are obtained, in which the second adjustment parameter includes any one of a coefficient or an offset.

The second adjustment parameter and the second RSRP threshold described in the disclosure are configured by the base station and sent to the eRedCap terminal. In an example, the second adjustment parameter is a coefficient (such as expressed by *alpha).* The second adjustment parameter *alpha* may be indicated/configured by the base station, or a specific value of the second adjustment parameter may be given by the protocol, which is not limited in the disclosure.

The second adjustment parameter is an offset (such as expressed by *offset).* As an implementable manner of the disclosure, the *offset* is an offset relative to the non-eRedCap terminal. It may be set according to service needs, without specific limitations.

It needs to be noted that the coefficient and offset described in the disclosure are all configurable fixed values.

At S602, the first RSRP threshold is determined by calculating according to the second adjustment coefficient and the second RSRP threshold based on a first RSRP threshold calculation rule.

In order to ensure a data channel transmission performance of the eRedCap terminal, a separate first RSRP threshold may be configured for the eRedCap terminal. The eRedCap terminal obtains the RSRP by measuring a Synchronization Signal and PBCH block (SSB). The measured RSRP value needs to be less than the first RSRP threshold before the SDT transmission may be performed.

As a possible implementation of the disclosure, in order to ensure the data channel transmission performance of the eRedCap terminal, the first RSRP threshold may be higher than the second RSRP threshold. The higher the first RSRP threshold set by the eRedCap terminal, the smaller the corresponding link loss. In this case, a higher MCS may be used to transmit a larger TBS to ensure the SDT transmission performance, while reducing larger transmission delay and larger terminal energy consumption of the payload during the SDT. The size of the first RSRP threshold is not limited in the disclosure.

As an implementable manner of the disclosure, in a case that the first RSRP threshold is determined by calculating according to the second adjustment coefficient and the second RSRP threshold based on the first RSRP threshold calculation rule, the following manner may be adopted but is not limited: determining the first RSRP threshold by calculating the second RSRP threshold and the second adjustment parameter.

As an implementation, the first RSRP threshold calculation rule may be configured by the network device and sent to the eRedCap terminal; the first RSRP threshold calculation rule may also be agreed in the protocol, which is not limited in the disclosure.

For the eRedCap terminal, the method for determining its first RSRP threshold (first RSRP threshold) may be calculated by the following method: *alpha2 * RSRP threshold for non-eRedCap terminal,* where the *alpha2* is the second adjustment coefficient, and the *RSRP threshold for non-eRedCap terminal* is the second RSRP threshold. The method for determining the first RSRP threshold is not limited in the disclosure.

In summary, the Manner 3 configures a separate first RSRP threshold for the eRedCap terminal during the SDT transmission.

An embodiment of the disclosure provides a method for obtaining a second adjustment parameter. The method for obtaining the second adjustment parameter may be executed alone, or may be executed in combination with any embodiment of the disclosure or a possible implementation in the embodiments, or may be executed in combination with any technical solution in the related art. As an implementable manner of the disclosure, the second adjustment parameter is obtained. As another implementable manner of the disclosure, the second adjustment parameter sent by the network device via a transmission signaling is received. The principle of the method for obtaining the second adjustment parameter is similar to that of the method for obtaining the first adjustment parameter. For relevant explanations, please refer to the detailed description of the method for obtaining the first adjustment parameter, which will not be repeated here.

Manner 4: in a case that the first threshold includes an RSRP threshold, the first threshold is determined by calculation with reference to FIG. 7, which is a flowchart of another method for determining the first threshold by calculation according to an embodiment of the disclosure. As shown in FIG. 7, the method may include but is not limited to the following steps S701-S702.

At S701, a data volume threshold is obtained.

As an implementation, the network device may configure a data volume threshold and send the data volume threshold to the eRedCap terminal; or the data volume threshold may be agreed in the protocol, which is not limited in the disclosure.

At S702, the first RSRP threshold is determined according to the data volume threshold and a corresponding relationship between RSRPs and data volume thresholds.

After receiving the data volume threshold sent by the network device, the eRedCap terminal determines the first RSRP threshold corresponding to the data volume threshold according to the corresponding relationship between RSRPs and data volume thresholds. The corresponding relationship between RSRPs and data volume thresholds may be configured by the network device or agreed in the protocol, which is not limited in the disclosure.

In an example, the corresponding relationship between RSRPs and data volume thresholds is that the first RSRP threshold is configured as A1 in a case that the data volume threshold needs to be configured as B1, and the first RSRP threshold is configured as A2 in a case that the data volume threshold needs to be configured as B2. Therefore, after the eRedCap terminal receives the data volume threshold sent by the network device, the first RSRP threshold may be configured according to the given corresponding relationship between RSRPs and data volume thresholds.

In summary, in the Manner 4, the eRedCap terminal determines a separate first RSRP threshold configured for SDT transmission according to the data volume threshold and the corresponding relationship between RSRPs and data volume thresholds configured by the network device. That is, both the first RSRP threshold and the data volume threshold are configured.

The above Manner 1 to Manner 4 illustrate that the eRedCap terminal determines the first threshold by calculation.

Manner 5: the first threshold sent by the network device via a transmission signaling is received.

In actual applications, after receiving the first threshold sent by the network device via the transmission signaling, the eRedCap terminal determines the received first threshold as the first threshold of the eRedCap terminal. That is, after the first threshold is configured by the network device, it is sent to the eRedCap terminal. The eRedCap terminal receives the first threshold configured by the network device for the eRedCap terminal and uses it as the first threshold of the eRedCap terminal.

Specifically, in a case that the eRedCap terminal determines the first threshold, any of the above Manner 1 to Manner 5 may be used for determination in the disclosure, which is not limited in the disclosure.

The transmission signaling described in the disclosure is any one of: an RRC release message or an SIB1, which is not limited in the disclosure.

The disclosure provides another method for SDT transmission. FIG. 8 is a flow chart of another method for SDT transmission according to an embodiment of the disclosure. As shown in FIG. 8, the method for SDT transmission may include the following step S201.

At S201, in response to the eRedCap terminal supporting an SDT transmission, a first threshold is determined, and whether to perform the SDT transmission is determined according to the first threshold, in which the first threshold is the same as or different from a second threshold, and the second threshold is a threshold applied to a non-eRedCap terminal with a non-enhanced reduced capability.

In a case of determining the first threshold, the following content may be used but is not limited.

At S2011, in response to the second data volume threshold being less than or equal to the TBS maximum processing capacity of the eRedCap terminal, the second threshold is determined as the first threshold.

In this scenario, in the case of determining that the second data volume threshold is less than or equal to the TBS maximum processing capacity of the eRedCap terminal, the eRedCap terminal may directly determine the second threshold configured by the network device as the first threshold, in which the first threshold is the same as the second threshold. The SDT transmission may be performed by the second threshold.

For the description of step S201, please refer to the detailed description of any of the above embodiments, which will not be repeated here.

In summary, after the eRedCap terminal determines that the SDT transmission is supported by itself, in response to the second data volume threshold being less than or equal to the TBS maximum processing capacity of the eRedCap terminal, the second threshold is determined as the first threshold, and whether to perform the SDT transmission is determined according to the first threshold. By introducing a separate SDT transmission threshold for the eRedCap terminal, reasonable scheduling of the eRedCap terminal may be ensured.

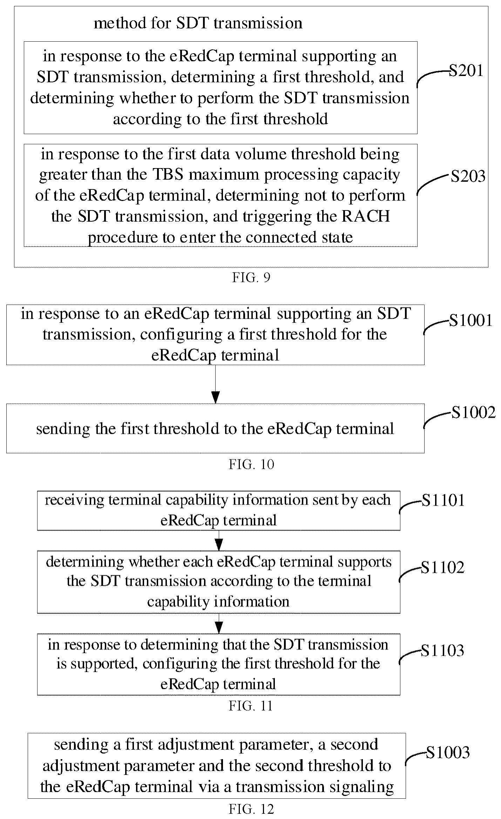

An embodiment of the disclosure provides another method for SDT transmission. FIG. 9 is a flowchart of another method for SDT transmission according to an embodiment of the disclosure. As shown in FIG. 9, the method for SDT transmission may include the following steps S201 and S203.

At S201, in response to the eRedCap terminal supporting an SDT transmission, a first threshold is determined, and whether to perform the SDT transmission is determined according to the first threshold, in which the first threshold includes a first data volume threshold.

At S203, in response to the first data volume threshold being greater than a TBS maximum processing capability of the eRedCap terminal, it is determined not to perform the SDT transmission, a RACH procedure is triggered to enter a connected state.

In the case of determining that the first data volume threshold is greater than the TBS maximum processing capacity of the eRedCap terminal, the purpose of reducing power consumption through the SDT transmission in the inactive state cannot be achieved. In order to ensure that the base station performs Msg3 scheduling, the RACH procedure is triggered to enter the connected state.

For the implementation of triggering the RACH procedure to enter the connected state, reference may be made to any description of the related art, which is not repeated in the disclosure.

It should be noted that the embodiments of the disclosure may include a plurality of steps (step S201 and step S203). For the convenience of description, these steps are numbered, but these numbers do not limit the execution slots and execution order between the steps. Instead, they are executed separately under different conditions or scenarios.

For the description of step S201, please refer to the detailed description of any of the above embodiments, which will not be repeated here.

In summary, after determining that the SDT transmission is supported, the eRedCap terminal determines the first threshold, determines whether to perform the SDT transmission according to the first threshold, in response to the first data volume threshold being greater than the TBS maximum processing capacity of the eRedCap terminal, determines not to perform the SDT transmission, and triggers the RACH procedure to enter the connected state. By introducing a separate SDT transmission threshold for the eRedCap terminal, reasonable scheduling of the eRedCap terminal may be ensured.

It needs to be noted that the embodiments of the disclosure may include a plurality of steps. For the convenience of description, these steps are numbered, but these numbers do not limit the execution slots or execution order between the steps; these steps may be implemented in any order, which is not limited in the embodiments of the disclosure.

An embodiment of the disclosure provides another method for SDT transmission. FIG. 10 is a flow chart of another method for SDT transmission according to an embodiment of the disclosure. As shown in FIG. 10, the method is performed by a network device. The method for SDT transmission may include the following steps:
At S1001, in response to an eRedCap terminal supporting an SDT transmission, a first threshold is configured for the eRedCap terminal.
At S1002, the first threshold is sent to the eRedCap terminal.

In practical applications, the transmission signaling is any one of an RRC Release message or an SIB1. The disclosure does not limit the signaling category of the transmission signaling.

In summary, in response to the eRedCap terminal supporting the SDT transmission, the network device configures the first threshold for the eRedCap terminal and sends the first threshold to the eRedCap terminal. After receiving the first threshold sent by the network device, the eRedCap terminal determines the first threshold and determines whether to perform the SDT transmission according to the first threshold. In response to the first data volume threshold being greater than the TBS maximum processing capacity of the eRedCap terminal, it is determined not to perform the SDT transmission, the RACH procedure is triggered to enter the connected state. By introducing a separate SDT transmission threshold for the eRedCap terminal, reasonable scheduling of the eRedCap terminal may be ensured.

The first threshold is the same as or different from a second threshold, and the second threshold is a threshold applied to a non-eRedCap terminal with a non-enhanced reduced capability. The first threshold includes at least one of: a first data volume threshold, or a first RSRP threshold. The second threshold includes at least one of: a second data volume threshold, or a second RSRP threshold. The first data volume threshold is the same as or different from the second data volume threshold, and the first RSRP threshold is the same as or different from the second RSRP. The first threshold on the network device side is the same as the first threshold on the eRedCap terminal side, and please refer to the detailed description of any of the above embodiments, which will not be repeated here.

An embodiment of the disclosure provides another method for SDT transmission. FIG. 11 is a flowchart of a method for configuring a first threshold for an eRedCap terminal according to an embodiment of the disclosure. As shown in FIG. 11, the method is performed by a network device. The method for SDT transmission may include the following steps S1101-S1103.

At S1101, terminal capability information sent by each eRedCap terminal is received.

After the eRedCap terminal establishes communication with the network device or in a case of performing PRACH transmission, the eRedCap terminal reports the terminal capability information of the eRedCap terminal to the network device. The terminal capability information includes but is not limited to terminal capability information such as a bandwidth and an antenna.

At S1102, it is determined whether each eRedCap terminal supports the SDT transmission according to the terminal capability information.

At S1103, if it is determined that the SDT transmission is supported, a first threshold is configured for the eRedCap terminal.

After determining that the eRedCap terminal supports the SDT transmission, a separate first threshold is configured for supporting the SDT transmission to ensure reasonable scheduling of the eRedCap terminal.

In a case that the network device configures the first threshold for the eRedCap terminal, the following three manners are used but not limited.

Manner 1: a first threshold is configured for the eRedCap terminal, in which the first threshold is different from the second threshold.

In the Manner 1, the network device configures a first threshold for the eRedCap terminal and a second threshold for the non-eRedCap terminal. In this configuration manner, the configured first threshold and second threshold are different.

Manner 2: in response to a second data volume threshold being greater than a TBS maximum processing capacity of the eRedCap terminal, a first threshold is configured for the eRedCap terminal, in which the first threshold is different from the second threshold.

In the case that the second data volume threshold is greater than the TBS maximum processing capacity of the eRedCap terminal, in order to ensure reasonable scheduling of the eRedCap terminal and avoid affecting the SDT transmission of the non-eRedCap terminal, the network device configures the first threshold for the eRedCap terminal, in which the first threshold is different from the second threshold.

Manner 3: in response to the second data volume threshold being less than or equal to the TBS maximum processing capacity of the eRedCap terminal, the second threshold is determined as the first threshold, and the first threshold is configured for the eRedCap terminal, in which the first threshold is the same as the second threshold.

In this scenario, in the case of determining that the second data volume threshold is less than or equal to the TBS maximum processing capacity of the eRedCap terminal, the network device may directly determine the configured second threshold as the first threshold, and the first threshold is the same as the second threshold.

An embodiment of the disclosure provides another method for SDT transmission. FIG. 12 is a flowchart of another method for SDT transmission according to an embodiment of the disclosure. As shown in FIG. 12, the method is performed by a network device. The method for SDT transmission may include the following step S1003.

At S1003, the first adjustment parameter, the second adjustment parameter and the second threshold are sent to the eRedCap terminal via a transmission signaling.

The first adjustment parameter, the second adjustment parameter and the second threshold are respectively sent to the eRedCap terminal, so that the eRedCap terminal determines the first threshold of the eRedCap terminal according to the first adjustment parameter, the second adjustment parameter and the second threshold and the calculation rule. For the description of how the eRedCap terminal determines the first threshold by calculation, please refer to the detailed description of any of the above embodiments, which will not be repeated here.

The transmission signaling is any one of an RRC Release message or an SIB1. The disclosure does not limit the signaling category of the transmission signaling.

It needs to be noted that, in a case that the network device sends the first threshold to the eRedCap terminal via the RRC release message, configuring the first threshold for the eRedCap terminal includes: configuring different first thresholds for different eRedCap terminals.

In a case that the first threshold is sent to the eRedCap terminal via the SIB1, configuring the first threshold for the eRedCap terminal includes: configuring the same first threshold for different eRedCap terminals, and configuring the same second threshold for different non-eRedCap terminals. That is, the SIB1 carries the same threshold value corresponding to the same type of terminal.

Corresponding to the method for SDT transmission according to the above embodiments of FIG. 2 to FIG. 9, the disclosure also provides an apparatus for SDT transmission. Since the apparatus for SDT transmission according to the embodiments of the disclosure corresponds to the method for SDT transmission according to the above embodiments of FIG. 2 to FIG. 9, the implementation of the method for SDT transmission is also applicable to the apparatus for SDT transmission according to the embodiments of the disclosure, which will not be described in detail here.

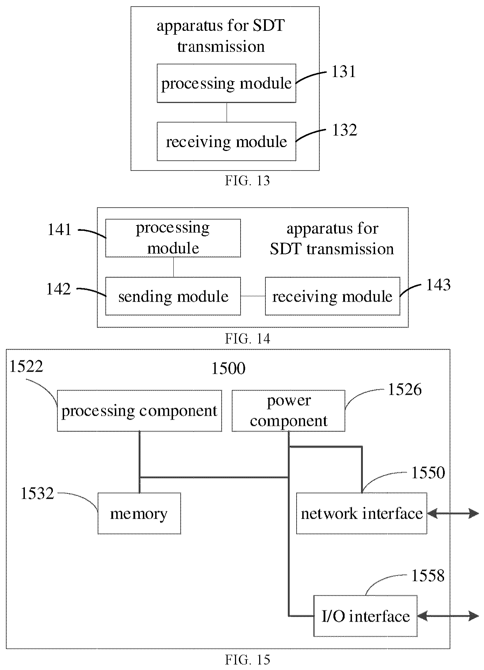

FIG. 13 is a structure diagram of an apparatus for SDT transmission according to an embodiment of the disclosure. The apparatus is arranged in an eRedCap terminal, and the apparatus comprises a processing module 131.

The processing module 131 is configured to in response to the eRedCap terminal supporting the SDT transmission, determine a first threshold, and determine whether to perform the SDT transmission according to the first threshold.

The processing module 131 is further configured to trigger an RACH procedure and enter a connected state in response to the eRedCap terminal not supporting the SDT transmission.

As a possible implementation of the embodiments of the disclosure, the first threshold is the same as or different from a second threshold, and the second threshold is a threshold applied to a non-eRedCap terminal with a non-enhanced reduced capability; the first threshold includes at least one of: a first data volume threshold, or a first RSRP threshold; the second threshold includes at least one of: a second data volume threshold, or a second RSRP threshold; the first data volume threshold is the same as or different from the second data volume threshold, and the first RSRP threshold is the same as or different from the second RSRP threshold.

As a possible implementation of the embodiments of the disclosure, the processing module 131 is further configured to: determine the first threshold by calculation.

As a possible implementation of the embodiments of the disclosure, in a case that the first threshold includes the first data volume threshold, the processing module 131 is further configured to: obtain a first adjustment parameter and the second data volume threshold, in which the first adjustment parameter includes any one of a coefficient or an offset; and determine the first data volume threshold by calculating according to according to the first adjustment parameter, the second data volume threshold and the TBS maximum processing capacity of the eRedCap terminal.

As a possible implementation of the embodiments of the disclosure, the processing module 131 is further configured to obtain the first adjustment parameter; the receiving module 132 is configured to receive the first adjustment parameter sent by a network device via a transmission signaling.

As a possible implementation of the embodiments of the disclosure, the processing module 131 is further configured to: determine the first data volume threshold by calculating a smaller of the second data volume threshold and the TBS maximum processing capacity of the eRedCap terminal, and a first adjustment coefficient; or determine the first data volume threshold by calculating the second data volume threshold and the first adjustment parameter; or determine the first data volume threshold by calculating the TBS maximum processing capacity of the eRedCap terminal and the first adjustment parameter.

As a possible implementation of the embodiments of the disclosure, in a case that the first threshold includes a data volume threshold, the processing module 131 is further configured to: obtain an RSRP threshold; and determine the first data volume threshold according to the RSRP threshold and a corresponding relationship between RSRPs and data volume thresholds.

As a possible implementation of the embodiments of the disclosure, in a case that the first threshold includes an RSRP threshold, the processing module 131 is further configured to: obtain a second adjustment parameter and the second RSRP threshold, in which the second adjustment parameter includes any one of a coefficient or an offset; and determine the first RSRP threshold by calculating according to a second adjustment coefficient and the second RSRP threshold based on a first RSRP threshold calculation rule.

As a possible implementation of the embodiments of the disclosure, the processing module 131 is further configured to: determine the first RSRP threshold by calculating the second RSRP threshold and the second adjustment parameter.

As a possible implementation of the embodiments of the disclosure, the processing module is further used to obtain the second adjustment parameter; the receiving module 132 is configured to receive the second adjustment parameter sent by a network device via a transmission signaling.

As a possible implementation of the embodiments of the disclosure, in a case that the first threshold includes an RSRP threshold, the processing module 131 is further configured to: obtain a data volume threshold; and determine the first RSRP threshold according to the data volume threshold and a corresponding relationship between RSRPs and data volume thresholds.

As a possible implementation of the embodiments of the disclosure, the receiving module 132 is configured to receive the first threshold sent by a network device via a transmission signaling.

As a possible implementation of the embodiments of the disclosure, the transmission signaling is any one of an RRC release message or an SIB1.

As a possible implementation of the embodiments of the disclosure, the processing module 131 is further configured to: in response to the second data volume threshold being less than or equal to a TBS maximum processing capacity of the eRedCap terminal, determine the second threshold as the first threshold, in which the first threshold is the same as the second threshold.

As a possible implementation of the embodiments of the disclosure, the processing module 131 is further configured to: in response to the first data volume threshold being greater than the TBS maximum processing capacity of the eRedCap terminal, determine not to perform the SDT transmission, and trigger the RACH procedure to enter the connected state.

Corresponding to the method for SDT transmission according to the above embodiments of FIG. 10 to FIG. 12, the disclosure also provides an apparatus for SDT transmission. Since the apparatus for SDT transmission according to the embodiments of the disclosure corresponds to the method for SDT transmission according to the above embodiments of FIG. 10 to FIG. 12, the implementation of the method for SDT transmission is also applicable to the apparatus for SDT transmission according to the embodiments of the disclosure, which will not be described in detail here.

FIG. 14 is a structure diagram of an apparatus for SDT transmission according to an embodiment of the disclosure. The apparatus is arranged in a network device, and the apparatus comprises a processing module 141 and a sending module 142.

The processing module 141 is configured to in response to an eRedCap terminal supporting the SDT transmission, configure a first threshold for the eRedCap terminal.

The sending module 142 is configured to send the first threshold to the eRedCap terminal via a transmission signaling.

As a possible implementation of the embodiments of the disclosure, the first threshold is the same as or different from a second threshold, and the second threshold is a threshold applied to a non-eRedCap terminal with a non-enhanced reduced capability; the first threshold includes at least one of: a first data volume threshold, or a first RSRP threshold; the second threshold includes at least one of: a second data volume threshold, or a second RSRP threshold; the first data volume threshold is the same as or different from the second data volume threshold, and the first RSRP threshold is the same as or different from the second RSRP threshold

A possible implementation of the embodiments of the disclosure includes: a receiving module 143, configured to receive terminal capability information sent by each eRedCap terminal; the processing module 141 is further configured to determine whether each eRedCap terminal supports the SDT transmission according to the terminal capability information, and in response to determining that the SDT transmission is supported, configure the first threshold for the eRedCap terminal.

As a possible implementation of the embodiments of the disclosure, the processing module 141 is further used to configure the first threshold for the eRedCap terminal, in which the first threshold is different from the second threshold; or in response to the second data volume threshold being greater than a TBS maximum processing capacity of the eRedCap terminal, configure the first threshold for the eRedCap terminal, in which the first threshold is different from the second threshold; or in response to the second data volume threshold being less than or equal to the TBS maximum processing capacity of the eRedCap terminal, determine the second threshold as the first threshold, and configure the first threshold for the eRedCap terminal, in which the first threshold is the same as the second threshold.

As a possible implementation of the embodiments of the disclosure, the sending module 142 is further configured to send a first adjustment parameter, a second adjustment parameter and the second threshold to the eRedCap terminal via a transmission signaling.

As a possible implementation of the embodiments of the disclosure, the transmission signaling is any one of an RRC release message or an SIB1.

As a possible implementation of the embodiments of the disclosure, in a case that the first threshold is sent to the eRedCap terminal via the RRC release message, the processing module is further used to configure different first thresholds for different eRedCap terminals.

In order to implement the above embodiments, the disclosure also provides a device for SDT transmission, which includes a processor and a memory storing a computer program. In a case that the computer program is executed by the processor, the device is caused to perform the method shown in FIG. 2 to FIG. 9.

In order to implement the above embodiment, the disclosure also provides another device for SDT transmission, including: a processor and an interface circuit.

The interface circuit is configured to receive code instructions and transmit the code instructions to the processor.

The processor is configured to run the code instructions to execute the methods shown in FIG. 2 to FIG. 9.

In order to implement the above embodiments, the disclosure provides a computer-readable storage medium for storing instructions. In a case that the instructions are executed, the methods shown in FIG. 2 to FIG. 9 are implemented.

In the embodiments according to the disclosure, the methods according to the embodiments of the disclosure are introduced from the perspective of interaction parties such as the eRedCap terminal and the network device. In order to implement the various functions of the methods in the embodiments of the disclosure, the interaction parties such as the eRedCap terminal and the network device may include a hardware structure and a software module to implement the above-mentioned functions in the form of the hardware structure, the software module, or the hardware structure plus the software module. Any of the above functions may be implemented in the form of a hardware structure, a software module, or a hardware structure plus a software module.

Referring to FIG. 15, it is a schematic diagram of a structure of a device for SDT transmission according to an embodiment of the disclosure. Referring to FIG. 15, the network device 1500 includes a processing component 1522, which further includes at least one processor, and memory resources represented by a memory 1532 for storing instructions executable by the processing component 1522, such as application programs. The application programs stored in the memory 1532 may include one or more modules, each of which corresponds to a set of instructions. In addition, the processing component 1522 is configured to execute instructions to perform any of the above methods applied to the network device, for example, the methods described in the embodiments of FIG. 2 to FIG.12.

The network device 1500 may also include a power component 1526 configured to perform power management of the network device 1500, a wired or wireless network interface 1550 configured to connect the network device 1500 to a network, and an input/output (I/O) interface 1558. The network device 1500 may operate based on an operating system stored in the memory 1532, such as a Windows Server^{™}, an Mac OS X^{™}, a Unix^{™}, a Linux^{™}, a FreeBSD^{™}, or the like.

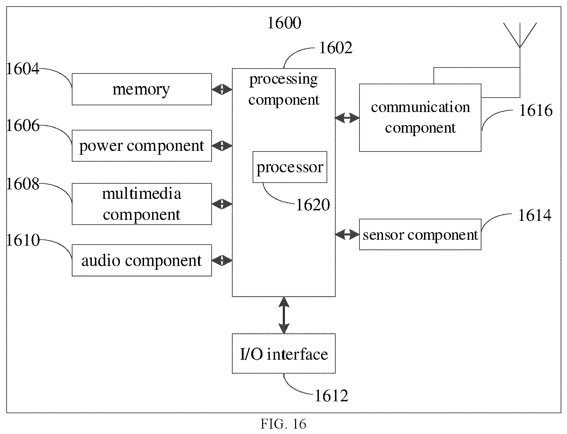

FIG. 16 is a block diagram of a device for SDT transmission according to an embodiment of the disclosure. For example, the terminal 1600 may be a mobile phone, a computer, a digital broadcast terminal, a messaging device, a game console, a tablet device, a medical device, a fitness device, a personal digital assistant, etc.

Referring to FIG. 16, the terminal 1600 may include at least one component: a processing component 1602, a memory 1604, a power supply component 1606, a multimedia component 1608, an audio component 1610, an inputs/outputs interface (I/O) 1612, a sensor component 1614, and a communication component 1616.

The processing component 1602 generally controls the overall operation of the terminal 1600, such as operations associated with displays, telephone calls, data communications, camera operations, and operations associated with recording operations. The processing component 1602 may include at least one processor 1620 to execute instructions to accomplish all or some of the steps of the method described above. Alternatively, the processing component 1602 may include at least one module to facilitate interaction between the processing component 1602 and other components. For example, the processing component 1602 may include a multimedia module to facilitate interaction between the multimedia component 1608 and the processing component 1602.

The memory 1604 is configured to store various types of data to support operation at the terminal 1600. Examples of such data include instructions for any application program or method operated on the terminal 1600, contact data, phone book data, messages, pictures, videos, etc. The memory 1604 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or CD-ROM.

The power supply component 1606 provides power to the various components of the terminal 1600. The power supply component 1606 may include a power management system, at least one power supply, and other components associated with generating, managing, and distributing power for the terminal 1600.

The multimedia component 1608 includes a screen providing an output interface between the terminal 1600 and a user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also detect a duration and a pressure associated with the touch or swipe operation. In some embodiments, the multimedia component 1608 includes a front-facing camera and/or a rear-facing camera. The front camera and/or the rear camera may receive external multimedia data in a case that the terminal 1600 is in an operating mode, such as a shooting mode or a video mode. Each of the front camera and the rear camera may be a fixed optical lens system or have a focal length and optical zoom capability.

The audio component 1610 is configured to output and/or input audio signals. For example, the audio component 1610 includes a microphone (MIC) that is configured to receive external audio signals in a case that the terminal 1600 is in an operational mode, such as a call mode, a recording mode, and a voice recognition mode. The received audio signals may be further stored in the memory 1604 or sent via the communication component 1616. In some embodiments, the audio component 1610 further includes a speaker for outputting audio signals.

The I/ O interface 1612 provides an interface between the processing component 1602 and a peripheral interface module, said peripheral interface module may be a keypad, a click wheel, buttons, etc. These buttons may include, but are not limited to: a home button, a volume button, a start button, and a lock button.

The sensor component 1614 includes at least one sensor for providing various aspects of status assessment for the terminal 1600. For example, the sensor component 1614 may detect an open/closed state of the terminal 1600, the relative positioning of components, such as the display and keypad of the terminal 1600, the sensor component 1614 may also detect a change in the position of the terminal 1600 or one of the components of the terminal 1600, the presence or absence of user contact with the terminal 1600, the orientation of the terminal 1600 or acceleration/deceleration of the terminal 1600, and the temperature change of the terminal 1600. The sensor component 1614 may include a proximity sensor configured to detect the presence of a nearby object in the absence of any physical contact. The sensor component 1614 may also include an optical sensor, such as a CMOS or CCD image sensor, for use in imaging applications. In some embodiments, the sensor component 1614 may also include an acceleration sensor, a gyroscope sensor, a magnetic sensor, a pressure sensor, or a temperature sensor.

The communication component 1616 is configured to facilitate communication between the terminal 1600 and other devices by wired or wireless means. The terminal 1600 may access a wireless network based on a communication standard, such as Wi-Fi, 2G or 3G, or their combination. In an exemplary embodiment, the communication component 416 receives broadcast signals or broadcast-related information from an external broadcast management system in a broadcast channel. In an exemplary embodiment, the communication component 1616 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the terminal 1600 may be implemented by at least one application-specific integrated circuit (ASIC), digital signal processor (DSP), digital signal processing device (DSPD), programmable logic device (PLD), field-programmable gate array (FPGA), controller, microcontroller, microprocessor, or other electronic components for performing the methods described above.

In exemplary embodiments, there is also provided a non-transitory computer-readable storage medium including instructions, such as a memory 1604 including instructions, the instructions being executable by a processor 1620 of the terminal 1600 for accomplishing the above-described method shown in FIG. 2 to FIG. 13. For example, the non-transitory computer-readable storage medium may be an ROM, a random access memory (RAM), a CD-ROM, a magnetic tape, a floppy disks, and optical data storage devices, etc.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and design requirements of the entire system. Those skilled in the art may use various methods to implement the described functions for each specific application, but such implementation should not be understood as going beyond the protection scope of the embodiments of the disclosure.

In the above embodiments, all or part of them may be implemented in software, hardware, firmware or any combination of them. In a case that implemented in software, all or part of the implementation may be in the form of a computer program product. The computer program product includes one or more computer programs. In a case that the computer program is loaded and executed on a computer, the process or function described in the embodiments of the disclosure is generated in whole or in part. The computer may be a general purpose computer, a special purpose computer, a computer network, or other programmable device. The computer program may be stored in a computer-readable storage medium, or transmitted from one computer-readable storage medium to another computer-readable storage medium. For example, the computer program may be transmitted from one website, computer, server or data center to another website, computer, server or data center via a wired means (e.g., a coaxial cable, an optical fiber, a digital subscriber line (DSL)) or a wireless means (e.g., infrared, wireless, microwave, etc.). The computer-readable storage medium may be any available medium that may be accessed by a computer or a data storage device such as a server or a data center that includes one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art may understand that the various numerical numbers such as first and second involved in the disclosure are only used for distinction for convenience of description, without a limitation to the scope of the embodiments of the disclosure, and also indicate the order of precedence.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. In a case of configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the device for SDT transmission, and the values or expressions of the parameters may also be other values or expressions that may be understood by the device for SDT transmission. In a case of implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein may be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, for the specific working processes of the systems, devices and units described above reference may be made to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for small data packet transmission (SDT) transmission, performed by an enhanced reduced capability (eRedCap) terminal, and comprising:
in response to the eRedCap terminal supporting an SDT transmission, determining a first threshold, and determining whether to perform the SDT transmission according to the first threshold; or
in response to the eRedCap terminal not supporting the SDT transmission, triggering a random access channel (RACH) procedure to enter a connected state.

2. The method according to claim 1, wherein
the first threshold is the same as or different from a second threshold, and the second threshold is a threshold applied to a non-eRedCap terminal with a non-enhanced reduced capability;
the first threshold comprises at least one of: a first data volume threshold, or a first reference signal receiving power (RSRP) threshold;
the second threshold comprises at least one of: a second data volume threshold, or a second RSRP threshold; and
the first data volume threshold is the same as or different from the second data volume threshold, and the first RSRP threshold is the same as or different from the second RSRP threshold.

3. The method according to claim 2, wherein determining the first threshold comprises:
determining the first threshold by calculation.

4. The method according to claim 3, wherein in a case that the first threshold comprises the first data volume threshold, determining the first threshold by calculation comprises:
obtaining a first adjustment parameter and the second data volume threshold, wherein the first adjustment parameter comprises any one of: a coefficient or an offset; and
determining the first data volume threshold by calculating according to the first adjustment parameter, the second data volume threshold and a transport block size (TBS) maximum processing capacity of the eRedCap terminal.

5. The method according to claim 4, wherein obtaining the first adjustment parameter comprises:
obtaining the first adjustment parameter; or
receiving the first adjustment parameter sent by a network device via a transmission signaling.

6. The method according to claim 5, wherein determining the first data volume threshold by calculating according to the first adjustment parameter, the second data volume threshold and the TBS maximum processing capacity of the eRedCap terminal comprises:
determining the first data volume threshold by calculating a smaller of the second data volume threshold and the TBS maximum processing capacity of the eRedCap terminal, and a first adjustment coefficient; or
determining the first data volume threshold by calculating the second data volume threshold and the first adjustment parameter; or
determining the first data volume threshold by calculating the TBS maximum processing capacity of the eRedCap terminal and the first adjustment parameter.

7. The method according to claim 3, wherein in a case that the first threshold comprises a data volume threshold, determining the first threshold by calculation comprises:
obtaining an RSRP threshold; and
determining the first data volume threshold according to the RSRP threshold and a corresponding relationship between RSRPs and data volume thresholds.

8. The method according to claim 3, wherein in a case that the first threshold comprises an RSRP threshold, determining the first threshold by calculation comprises:
obtaining a second adjustment parameter and the second RSRP threshold, wherein the second adjustment parameter comprises any one of a coefficient or an offset; and
determining the first RSRP threshold by calculating according to a second adjustment coefficient and the second RSRP threshold based on a first RSRP threshold calculation rule.

9. The method according to claim 8, wherein determining the first RSRP threshold by calculating according to the second adjustment coefficient and the second RSRP threshold based on the first RSRP threshold calculation rule comprises:
determining the first RSRP threshold by calculating the second RSRP threshold and the second adjustment parameter.

10. The method according to claim 9, wherein obtaining the second adjustment parameter comprises:
obtaining the second adjustment parameter; or
receiving the second adjustment parameter sent by a network device via a transmission signaling.

11. The method according to claim 3, wherein in a case that the first threshold comprises an RSRP threshold, determining the first threshold by calculation comprises:
obtaining a data volume threshold; and
determining the first RSRP threshold according to the data volume threshold and a corresponding relationship between RSRPs and data volume thresholds.

12. The method according to claim 2, wherein determining the first threshold comprises:
receiving the first threshold sent by a network device via a transmission signaling.

13. The method according to claim 5, 10 or 12, wherein the transmission signaling is any one of: a radio resource control (RRC) release message, or a system information block 1 (SIB1).

14. The method according to claim 2 or 3, further comprising:
in response to the second data volume threshold being less than or equal to a TBS maximum processing capacity of the eRedCap terminal, determining the second threshold as the first threshold, wherein the first threshold is the same as the second threshold.

15. The method according to claim 14, further comprising:
in response to the first data volume threshold being greater than the TBS maximum processing capacity of the eRedCap terminal, determining not to perform the SDT transmission, and triggering the RACH procedure to enter the connected state.

16. A method for small data packet transmission (SDT) transmission, performed by a network device, and comprising:
in response to an enhanced reduced capability (eRedCap) terminal supporting an SDT transmission, configuring a first threshold for the eRedCap terminal; and
sending the first threshold to the eRedCap terminal.

17. The method according to claim 16, wherein
the first threshold is the same as or different from a second threshold, and the second threshold is a threshold applied to a non-eRedCap terminal with a non-enhanced reduced capability;
the first threshold comprises at least one of: a first data volume threshold, or a first reference signal receiving power (RSRP) threshold;
the second threshold comprises at least one of: a second data volume threshold, or a second RSRP threshold; and
the first data volume threshold is the same as or different from the second data volume threshold, and the first RSRP threshold is the same as or different from the second RSRP threshold.

18. The method according to claim 17, wherein configuring the first threshold for the eRedCap terminal comprises:
receiving terminal capability information sent by each eRedCap terminal;
determining whether each eRedCap terminal supports the SDT transmission according to the terminal capability information; and
in response to determining that the SDT transmission is supported, configuring the first threshold for the eRedCap terminal.

19. The method according to claim 18, wherein configuring the first threshold for the eRedCap terminal comprises:
configuring the first threshold for the eRedCap terminal, wherein the first threshold is different from the second threshold; or
in response to the second data volume threshold being greater than a transport block size (TBS) maximum processing capacity of the eRedCap terminal, configuring the first threshold for the eRedCap terminal, wherein the first threshold is different from the second threshold; or
in response to the second data volume threshold being less than or equal to the TBS maximum processing capacity of the eRedCap terminal, determining the second threshold as the first threshold, and configuring the first threshold for the eRedCap terminal, wherein the first threshold is the same as the second threshold.

20. The method according to claim 19, further comprising:
sending a first adjustment parameter, a second adjustment parameter and the second threshold to the eRedCap terminal via a transmission signaling.

21. The method according to claim 20, wherein the transmission signaling is any one of: a radio resource control (RRC) release message, or a system information block 1 (SIB1).

22. The method according to claim 21, wherein in a case that the first threshold is sent to the eRedCap terminal via the RRC release message, configuring the first threshold for the eRedCap terminal comprises:
configuring different first thresholds for different eRedCap terminals.

23. An apparatus for small data packet transmission (SDT) transmission, arranged in an enhanced reduced capability (eRedCap) terminal, and comprising:
a processing module, configured to in response to the eRedCap terminal supporting an SDT transmission, determine a first threshold, and determine whether to perform the SDT transmission according to the first threshold;
the processing module is further configured to in response to the eRedCap terminal not supporting the SDT transmission, trigger a random access channel (RACH) procedure to enter a connected state.

24. An apparatus for small data packet transmission (SDT) transmission, arranged in a network device, and comprising:
a processing module, configured to in response to an enhanced reduced capability (eRedCap) terminal supporting an SDT transmission, configure a first threshold for the eRedCap terminal; and
a sending module, configured to send the first threshold to the eRedCap terminal via a transmission signaling.

25. A device for small data packet transmission (SDT) transmission, comprising a processor and a memory storing a computer program, wherein in a case that the computer program is executed by the processor, the device is caused to perform the method according to any one of claims 1 to 15, or the method according to any one of claims 16 to 22.

26. A device for small data packet transmission (SDT) transmission, comprising a processor and an interface circuit;
wherein the interface circuit is configured to receive code instructions and transmit the code instructions to the processor; and
the processor is configured to run the code instructions and execute the method according to any one of claims 1 to 15, or the method according to any one of claims 16 to 22.

27. A computer-readable storage medium storing instructions which, when executed, the method according to any one of claims 1 to 15 or the method according to any one of claims 16 to 22 is implemented.
